# FASCICULE DE BREVET EUROPEEN

(11) **EP 4 279 204 B1**
(45) Date de publication et mention de la délivrance du brevet: **05.03.2025**
(21) Numéro de dépôt: 23173042.5
(22) Date de dépôt: 12.05.2023
(51) Int. Cl.: B22F 10/25, B23K 10/02, B23K 15/00, B23K 26/00, B23K 26/342, B33Y 10/00, B33Y 50/02, B33Y 80/00, B22F 5/00, B23K 101/18, B23K 103/14

(54) **PROCÉDÉ DE FABRICATION ADDITIVE PAR DÉPÔT DE MATIÈRE SOUS ÉNERGIE FOCALISÉE PERMETTANT DE RÉALISER DES NERVURES SÉCANTES ET PIÈCE NERVURÉE OBTENUE À PARTIR DUDIT PROCÉDÉ**
VERFAHREN ZUR GENERATIVEN FERTIGUNG DURCH ABSCHEIDUNG VON MATERIAL MIT FOKUSSIERTER ENERGIE ZUR HERSTELLUNG VON TRENNRIPPEN UND AUS DIESEM VERFAHREN HERGESTELLTES GERIPPTES TEIL
ADDITIVE MANUFACTURING METHOD BY MEANS OF FOCUSED ENERGY MATERIAL DEPOSITION ALLOWING TO REALIZE INTERSECTING RIBS AND RIBBED WORKPIECE OBTAINED USING SAID METHOD

(30) Priorité: 16.05.2022 FR 2204600
(43) Date de publication de la demande: 22.11.2023
(73) Titulaire: AIRBUS OPERATIONS (S.A.S.), 31060 Toulouse (FR)
(72) Inventeur: SICRE, Matthieu, 31060 TOULOUSE (FR)
(74) Mandataire: Fantin, Laurent

(56) Documents cités:
- WO-A1-2020/038929
- RU-C1- 2 683 104
- US-A1- 2021 154 732

## Description

La présente invention se rapporte à un procédé de fabrication additive par dépôt de matière sous énergie focalisée permettant de réaliser des nervures sécantes ainsi qu'à une pièce nervurée obtenue à partir dudit procédé.

Selon une première technique de fabrication, un panneau nervuré est obtenu à partir d'un bloc de matière qui présente une épaisseur sensiblement égale à celle du panneau nervuré à obtenir et qui est usiné afin de retirer la matière entre les nervures. Selon un mode opératoire, l'outil utilisé pour le retrait de matière est une fraise.

A l'issue de l'usinage, les zones du panneau entre les nervures sont sensiblement planes. Il en est de même pour les faces latérales des nervures en dehors des zones d'intersection. Au niveau de ces zones d'intersection, les faces latérales des nervures sont reliées entre elles par des zones courbes qui présentent un rayon de courbure identique à celui de la fraise utilisée pour le retrait de matière.

Cette technique de fabrication est relativement longue et génère beaucoup de pertes de matière sous forme de copeaux. Lorsque la matière usinée est du titane, les copeaux générés lors de l'usinage ne peuvent pas être réutilisés. Même si pour certaines matières les copeaux générés peuvent être réutilisés, leur procédé de traitement est relativement coûteux.

Pour réduire la quantité de déchets selon une autre technique de fabrication une pièce est réalisée par fabrication additive en empilant des couches de matière obtenues par fusion d'une matière en utilisant une source d'énergie focalisée, comme un faisceau laser ou un faisceau d'électrons par exemple. Selon une technique dite par dépôt de matière sous énergie focalisée (également appelée DED pour « Directed Energy Deposition » en anglais), la matière sous forme de fils est déposée simultanément à l'apport d'énergie.

Selon cette technique de fabrication additive, il est possible de réaliser une nervure en superposant plusieurs couches de matière, obtenues chacune en déposant un fil ou plusieurs fils juxtaposés simultanément, en fonction de l'épaisseur de la nervure à réaliser.

Une telle technique de fabrication additive est notamment décrite dans les documents RU2683104, WO2020038929 et US2021154732.

Cette technique de fabrication additive est difficile à mettre en œuvre dans le cas de nervures sécantes.

En effet, le maintien d'une température élevée au niveau d'une zone d'intersection de première et deuxième nervures, en raison des passages successifs du faisceau d'apport d'énergie pour les première et deuxième nervures, entraîne une surchauffe de cette zone et donc une modification de la structure cristalline de la matière susceptible d'impacter les propriétés mécaniques de la matière.

La présente invention vise à remédier à tout ou partie des inconvénients de l'art antérieur.

A cet effet, l'invention a pour objet un procédé de fabrication additive d'au moins une intersection de nervures principale et secondaire en empilant des couches de matière, la nervure principale comprenant au moins un premier tronçon qui s'étend selon une première direction entre des première et deuxième extrémités situées de part et d'autre de la nervure secondaire, la nervure secondaire comprenant au moins un deuxième tronçon qui s'étend selon une deuxième direction, sécante avec la première direction, entre des première et deuxième extrémités, la deuxième extrémité du deuxième tronçon étant proche du premier tronçon. Selon un mode opératoire, au moins une couche de matière du premier tronçon est obtenue en déposant au moins un cordon de matière qui s'étend selon la première direction et relie les première et deuxième extrémités.

Selon l'invention, au moins une couche de matière du deuxième tronçon comprend une première partie obtenue en déposant au moins un cordon de matière distant du premier tronçon qui s'étend selon la deuxième direction ainsi qu'une deuxième partie obtenue en déposant au moins un cordon de matière accolé au premier tronçon qui s'étend selon la première direction.

Cette stratégie de dépose des cordons de matière au niveau d'une intersection de nervures limite les risques de surchauffe de cette zone et d'altération des propriétés mécaniques de la matière.

Selon une autre caractéristique, la première partie du deuxième tronçon est obtenue en déposant plusieurs cordons de matière rectilignes et parallèles à la deuxième direction. Selon une autre caractéristique, au moins un cordon de matière de la première partie est relié à au moins un cordon de matière de la deuxième partie de manière à former un cordon continu.

Selon une autre caractéristique, la deuxième partie du deuxième tronçon est obtenue en déposant un unique cordon de matière parallèle à la première direction.

Selon une autre caractéristique, au moins une couche de matière du deuxième tronçon est obtenue en déposant :
- un premier cordon de matière en L qui présente une première partie parallèle à la première direction et accolée au premier tronçon ainsi qu'une deuxième partie parallèle à la deuxième direction s'étendant jusqu'à la première extrémité du deuxième tronçon,
- un deuxième cordon de matière en L qui présente une première partie parallèle à la première direction et accolée au premier tronçon ainsi qu'une deuxième partie parallèle à la deuxième direction, s'étendant jusqu'à la première extrémité du deuxième tronçon, parallèle et accolée à la deuxième partie du premier cordon de matière en L.

Selon une autre caractéristique, les premier et deuxième cordons de matière en L sont reliés de manière à former un cordon continu.

Selon un autre mode de réalisation, la deuxième partie du deuxième tronçon est obtenue en déposant deux cordons de matière parallèles entre eux et à la première direction.

Selon une autre caractéristique, au moins une couche de matière du deuxième tronçon est obtenue en déposant :
- deux premiers cordons de matière parallèles entre eux et à la première direction, accolés au premier tronçon, qui s'étendent de part et d'autre de la deuxième extrémité du deuxième tronçon,
- deux deuxièmes cordons de matière parallèles entre eux et à la deuxième direction qui s'étendent à partir de la première extrémité du deuxième tronçon jusqu'à un des premiers cordons de matière.

Selon une autre caractéristique, les deux premiers cordons de matière sont reliés entre eux de manière à former un tronçon continu.

Selon un autre mode de réalisation, la deuxième partie du deuxième tronçon est obtenue en déposant trois cordons de matière parallèles entre eux et à la première direction.

Selon une autre caractéristique, au moins une couche de matière du deuxième tronçon est obtenue en déposant :
- deux premiers cordons de matière parallèles entre eux et à la première direction, accolés au premier tronçon, qui s'étendent de part et d'autre de la deuxième extrémité du deuxième tronçon,
- un deuxième cordon de matière en L présentant une première partie parallèle à la deuxième direction qui s'étend à partir de la première extrémité du deuxième tronçon jusqu'à un des premiers cordons de matière ainsi qu'une deuxième partie parallèle et accolée à un des premiers cordons de matière,
- un troisième cordon de matière parallèle et accolée à la première partie du deuxième cordon de matière qui s'étend à partir de la première extrémité du deuxième tronçon jusqu'à un des premiers cordons de matière.

Selon une autre caractéristique, les premiers cordons de matière et le deuxième cordon de matière en L sont reliés entre eux de manière à former un cordon continu.

L'invention a également pour objet un procédé de fabrication d'un panneau nervuré comprenant une première phase d'ébauche qui permet d'obtenir des ébauches de nervures comportant au moins une intersection obtenue à partir du procédé de fabrication additive selon l'une des caractéristiques précédentes ainsi qu'une deuxième phase d'usinage des nervures aux côtes finales. Elle a également pour objet un panneau nervuré obtenu à partir dudit procédé de fabrication.

D'autres caractéristiques et avantages ressortiront de la description de l'invention qui va suivre, description donnée à titre d'exemple uniquement, en regard des dessins annexés parmi lesquels :
- La figure 1 est une vue de dessus d'un panneau nervuré illustrant un mode de réalisation de l'invention,
- La figure 2 est une coupe selon le plan P2 du panneau nervuré visible sur la figure 1,
- La figure 3 est une représentation schématique des trajectoires d'un dépôt de matière permettant d'obtenir une intersection en croix illustrant un premier mode opératoire de l'invention,
- La figure 4 est une représentation schématique des trajectoires de dépôts de matière permettant d'obtenir une intersection en croix illustrant un deuxième mode de réalisation de l'invention,
- La figure 5 est une représentation schématique des trajectoires de dépôts de matière permettant d'obtenir une intersection en croix illustrant un troisième mode de réalisation de l'invention,
- La figure 6 est une représentation schématique des trajectoires de dépôts de matière permettant d'obtenir une intersection en croix illustrant un quatrième mode de réalisation de l'invention,
- La figure 7 est une représentation schématique des trajectoires de dépôts de matière permettant d'obtenir une intersection en T illustrant un premier mode de réalisation de l'invention,
- La figure 8 est une représentation schématique des trajectoires de dépôts de matière permettant d'obtenir une intersection en T illustrant un deuxième mode de réalisation de l'invention,
- La figure 9 est une représentation schématique des trajectoires de dépôts de matière permettant d'obtenir une intersection en T illustrant un troisième mode de réalisation de l'invention,
- La figure 10 est une représentation schématique des trajectoires de dépôts de matière permettant d'obtenir une intersection en T illustrant un quatrième mode de réalisation de l'invention,
- La figure 11 est une représentation d'une trajectoire d'un dépôt de matière permettant d'obtenir une nervure illustrant un premier mode de réalisation de l'invention,
- La figure 12 est une représentation d'une trajectoire d'un dépôt de matière permettant d'obtenir une nervure illustrant un deuxième mode de réalisation de l'invention,
- La figure 13 est une représentation d'une trajectoire d'un dépôt de matière permettant d'obtenir une nervure illustrant un troisième mode de réalisation de l'invention.

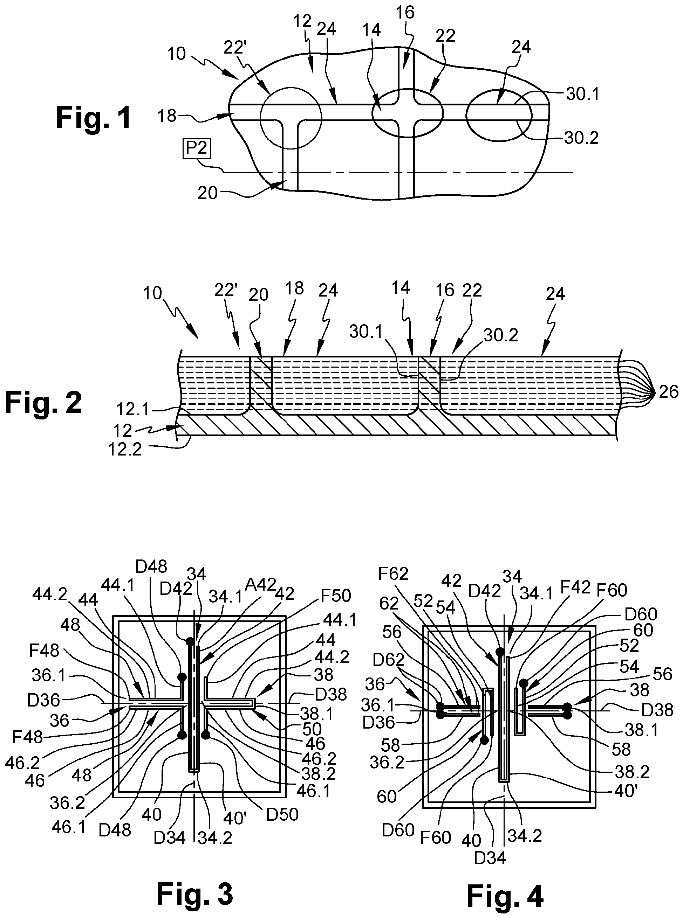

Selon un mode de réalisation visible sur les figures 1 et 2, un panneau nervuré 10 comprend une paroi 12 qui présente des première et deuxième faces opposées 12.1, 12.2 ainsi qu'au moins un jeu de nervures 14, 16, 18, 20 rapportées sur la première face 12.1 comportant au moins deux nervures 14, 16, 18, 20 sécantes au niveau d'au moins une intersection 22, 22'. Selon une configuration, le jeu de nervures comprend des première et deuxième nervures 14, 16 sécantes au niveau d'une première intersection 22 en croix, des troisième et quatrième nervures 18, 20 sécantes au niveau d'une deuxième intersection 22' en T ainsi que des tronçons de liaison 24 en dehors des première et deuxième intersections 22, 22'. Les première et troisième nervures 14, 18 peuvent être une unique et même nervure.

La paroi 12 peut être obtenue par tout moyen approprié, comme par une technique de laminage par exemple. Le procédé de fabrication d'au moins deux nervures 14, 16, 18, 20 sécantes comprend une première phase d'ébauche permettant d'obtenir des ébauches de nervures par fabrication additive ainsi qu'une deuxième phase d'usinage des nervures aux côtes finales. Selon une configuration, toutes les nervures 14, 16, 18, 20 sont obtenues par fabrication additive en superposant des couches de matière 26 lors de la première phase d'ébauche. En suivant, toutes les nervures 14, 16, 18, 20 et la première face 12.1 de la paroi 12 sont usinées aux côtes finales. Cette solution permet de réduire la quantité de déchets.

Chaque couche de matière 26 comprend au moins un cordon de matière obtenu par fusion d'au moins un fil grâce à une source d'énergie focalisée. Selon un mode opératoire, la source d'énergie focalisée génère un faisceau d'énergie présentant un point d'impact dans une zone de pose située sur un substrat et au niveau de laquelle est apportée la matière sous la forme d'au moins un fil. Généralement, la zone de pose est située dans une atmosphère contrôlée présentant au moins une caractéristique contrôlée parmi la composition gazeuse, la cinématique des gaz, la pression ou la température par exemple.

Le substrat peut être un support, une partie d'une pièce ou une couche de matière déjà déposée.

Le faisceau d'énergie peut être un faisceau laser, un faisceau d'électrons, un faisceau plasma ou autres.

Selon un mode de réalisation, un dispositif de fabrication comprend une tête de pose configurée pour contrôler le faisceau d'énergie et le focaliser en direction de la zone de pose et pour progressivement positionner le (ou les) fil(s) dans la zone de pose.

Le substrat et la zone de pose présentent un mouvement relatif dans un plan de dépôt (généralement horizontal) afin que le cordon de matière déposé suive une trajectoire de pose 28. Selon une première configuration, la zone de pose (et notamment la tête de pose) est fixe dans le plan de dépôt et le substrat se déplace par rapport à la zone de pose dans le plan de dépôt en fonction de la trajectoire de pose 28 souhaitée. Selon cette première configuration, en dehors du plan de dépôt, la tête de pose peut se déplacer verticalement. Selon une deuxième configuration, le substrat est fixe et la zone de pose (et notamment la tête de pose) se déplace par rapport au substrat en fonction de la trajectoire de pose 28 souhaitée. Selon une troisième configuration, la zone de pose (et notamment la tête de pose) est mobile dans le plan du dépôt.

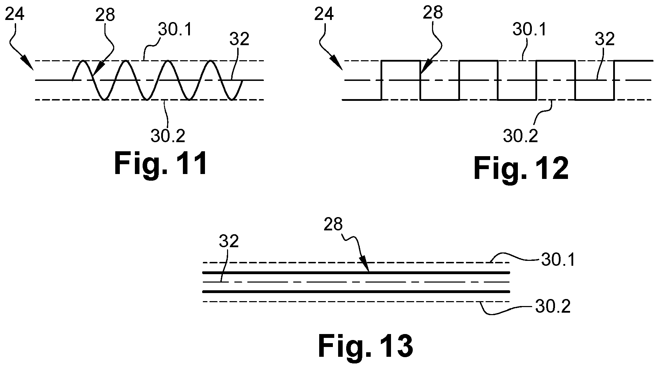

Au niveau des tronçons de liaison 24, chaque nervure 14 présente deux faces latérales 30.1, 30.2 ainsi qu'une largeur correspondant à la distance séparant les deux faces latérales 30.1, 30.2. Chaque nervure suit un profil 32 correspondant à une ligne située à équidistance des deux faces latérales 30.1, 30.2. Pour simplifier la représentation, le profil 32 visible sur les figures 11 à 13 est rectiligne. Bien entendu, l'invention n'est pas limitée à cette géométrie pour le profil 32. Ainsi, ce dernier pourrait être courbe ou comprendre une combinaison de portions courbes et rectilignes.

Selon un premier mode de réalisation visible sur la figure 11, pour chaque couche de matière 26, au droit d'un tronçon de liaison 24, la trajectoire de pose 28 du cordon de matière oscille de part et d'autre du profil 32 en suivant une trajectoire sinusoïdale entre les deux faces latérales 30.1, 30.2.

Selon un deuxième mode de réalisation visible sur la figure 12, pour chaque couche de matière 26, au droit d'un tronçon de liaison 24, la trajectoire de pose 28 du cordon de matière oscille de part et d'autre du profil 32 en suivant une trajectoire en créneau entre les deux faces latérales 30.1, 30.2.

Selon un troisième mode de réalisation visible sur la figure 13, pour chaque couche de matière 26, au droit d'un tronçon de liaison 24, la trajectoire de pose 28 d'au moins deux cordons de matière est parallèle au profil 32 entre les deux faces latérales 30.1, 30.2.

Bien entendu, l'invention n'est pas limitée à ces trajectoires de pose. Quel que soit le mode opératoire, le nombre de cordons de matière déposés juxtaposés et/ou la trajectoire de pose 28 sont déterminés en fonction de la largeur souhaitée pour la nervure au droit du tronçon de liaison 24.

Selon des modes de réalisation visibles sur les figures 3 à 6, la première intersection 22 en croix comprend un premier tronçon 34 pour la première nervure 14 ainsi que des deuxième et troisième tronçons 36, 38 pour la deuxième nervure 16 positionnés de part et d'autre du premier tronçon 34. Le premier tronçon 34 s'étend, en suivant une première direction D34, entre des première et deuxième extrémités 34.1, 34.2 positionnées de part et d'autre des deuxième et troisième tronçons 36, 38. Le deuxième tronçon 36 s'étend, en suivant une deuxième direction D36, entre des première et deuxième extrémités 36.1, 36.2, la deuxième extrémité 36.2 étant accolée au premier tronçon 34. Le troisième tronçon 38 s'étend, en suivant une troisième direction D38, entre des première et deuxième extrémités 38.1, 38.2, la deuxième extrémité 38.2 étant accolée au premier tronçon 34. Les deuxième et troisième directions D36, D38 sont sensiblement alignées. Les première et deuxième extrémités 34.1, 34.2 sont disposées de part et d'autre des deuxième et troisième tronçons 36, 38.

Selon une configuration, la première direction D34 du premier tronçon 34 est sensiblement perpendiculaire aux deuxième et troisième directions D36, D38 des deuxième et troisième tronçons 36, 38. Bien entendu, l'invention n'est pas limitée à cette configuration.

Selon des modes de réalisation visibles sur les figures 3 à 6, pour au moins une couche de matière 26 et de préférence chaque couche de matière 26, le premier tronçon 34 est obtenu en déposant des premier et deuxième cordons de matière 40, 40' sensiblement parallèles entre eux et à la première direction D34, reliant les première et deuxième extrémités 34.1, 34.2. Selon une configuration, les premier et deuxième cordons de matière 40, 40' sont continus et reliés entre eux au niveau de la première ou deuxième extrémité 34.1, 34.2. Ainsi, pour au moins une couche de matière 26 et de préférence chaque couche de matière 26, les premier et deuxième cordons de matière 40, 40' sont obtenus à partir d'une trajectoire de pose 42 comprenant un point de départ D42 situé au niveau de la première extrémité 34.1, un trajet aller-retour reliant les première et deuxième extrémités 34.1, 34.2 ainsi qu'un point d'arrivée F42 accolé au point de départ D42.

Selon un premier mode de réalisation visible sur la figure 3, pour au moins une couche de matière 26 et de préférence chaque couche de matière 26, chaque deuxième ou troisième tronçon 36, 38 est obtenu en déposant :
- un premier cordon de matière 44 en L qui présente une première partie 44.1 parallèle à la première direction D34 et accolée au premier ou deuxième cordon de matière 40, 40' du premier tronçon 34 ainsi qu'une deuxième partie 44.2 parallèle à la deuxième direction D36 ou D38 s'étendant jusqu'à la première extrémité 36.1, 38.1 du deuxième ou troisième tronçon 36, 38 ;
- un deuxième cordon de matière 46 en L qui présente une première partie 46.1 parallèle à la première direction D34 et accolée au premier ou deuxième cordon de matière 40, 40' du premier tronçon 34 ainsi qu'une deuxième partie 46.2 parallèle à la deuxième direction D36 ou D38, s'étendant jusqu'à la première extrémité 36.1, 38.1 du deuxième ou troisième tronçon 36, 38, parallèle et accolée à la deuxième partie 44.2 du premier cordon de matière 44 en L.

Selon une configuration, les premier et deuxième cordons de matière 44, 46 en L sont distincts, comme illustré sur la figure 3 pour le deuxième tronçon 36. Pour au moins une couche de matière 26 et de préférence chaque couche de matière 26, chacun des premier et deuxième cordons de matière 44, 46 en L est obtenu à partir d'une trajectoire de pose 48 comprenant un point de départ D48 situé entre la première ou deuxième extrémité 34.1, 34.2 du premier tronçon 34 et la deuxième extrémité 36.2 du deuxième tronçon 36, un trajet en L ainsi qu'un point d'arrivée F48 situé au niveau de la première extrémité 36.1 du deuxième tronçon 36.

Selon une autre configuration, les premier et deuxième cordons de matière 44, 46 en L sont reliés au niveau de la première extrémité 38.1 du troisième tronçon 38 de manière à former un cordon continu, comme illustré sur la figure 3 pour le troisième tronçon 38. Pour au moins une couche de matière 26 et de préférence chaque couche de matière 26, les premier et deuxième cordons de matière 44, 46 en L sont obtenus à partir d'une trajectoire de pose 50 comprenant un point de départ D50 situé entre la deuxième extrémité 34.2 du premier tronçon 34 et la deuxième extrémité 38.2 du troisième tronçon 38, un premier trajet en L jusqu'à la première extrémité 38.1 du troisième tronçon 38, une deuxième trajet en L ainsi qu'un point d'arrivée F50 situé entre la première extrémité 34.1 du premier tronçon 34 et la deuxième extrémité 38.2 du troisième tronçon 38.

Selon un deuxième mode de réalisation visible sur la figure 4, pour au moins une couche de matière 26 et de préférence chaque couche de matière 26, le deuxième ou troisième tronçon 36, 38 est obtenu en déposant :
- deux premiers cordons de matière 52, 54 parallèles entre eux et à la première direction D34, accolés au premier tronçon 34, qui s'étendent de part et d'autre de la deuxième extrémité 36.2, 38.2 du deuxième ou troisième tronçon 36, 38,
- deux deuxièmes cordons de matière 56, 58 parallèles entre eux et à la deuxième ou troisième direction D36, D38 qui s'étendent à partir de la première extrémité 36.1, 38.1 du deuxième ou troisième tronçon 36, 38 jusqu'à un des premiers cordons de matière 52.

Selon une configuration, les deux premiers cordons de matière 52, 54 sont reliés entre eux de manière à former un tronçon continu. Ainsi, pour au moins une couche de matière 26 et de préférence chaque couche de matière 26, les deux premiers cordons de matière 52, 54 sont obtenus à partir d'une trajectoire de pose 60 comprenant un point de départ D60 situé entre la première ou deuxième extrémité 34.1, 34.2 du premier tronçon 34 et la deuxième extrémité 36.2, 38.2 du deuxième ou troisième tronçon 36, 38, un trajet aller-retour ainsi qu'un point d'arrivée F60 accolé au point de départ D60. Selon un mode de réalisation, pour le deuxième tronçon 36, le point de départ D60 est proche de la deuxième extrémité 34.2 du premier tronçon 34. Pour le troisième tronçon 38, le point de départ D60 est proche de la première extrémité 34.1 du premier tronçon 34.

Chacun des deuxièmes cordons de matière 56, 58 est obtenu à partir d'une trajectoire de pose 62 comprenant un point de départ D62 au niveau de la première extrémité 36.1, 38.1 du deuxième ou troisième tronçon 36, 38, un trajet rectiligne ainsi qu'un point d'arrivée F62 accolé aux premiers cordons de matière 52, 54. En variante, le point de départ D62 pourrait être accolé aux premiers cordons de matière 52, 54 et le point d'arrivée F62 situé au niveau de la première extrémité 36.1, 38.1 du deuxième ou troisième tronçon 36, 38.

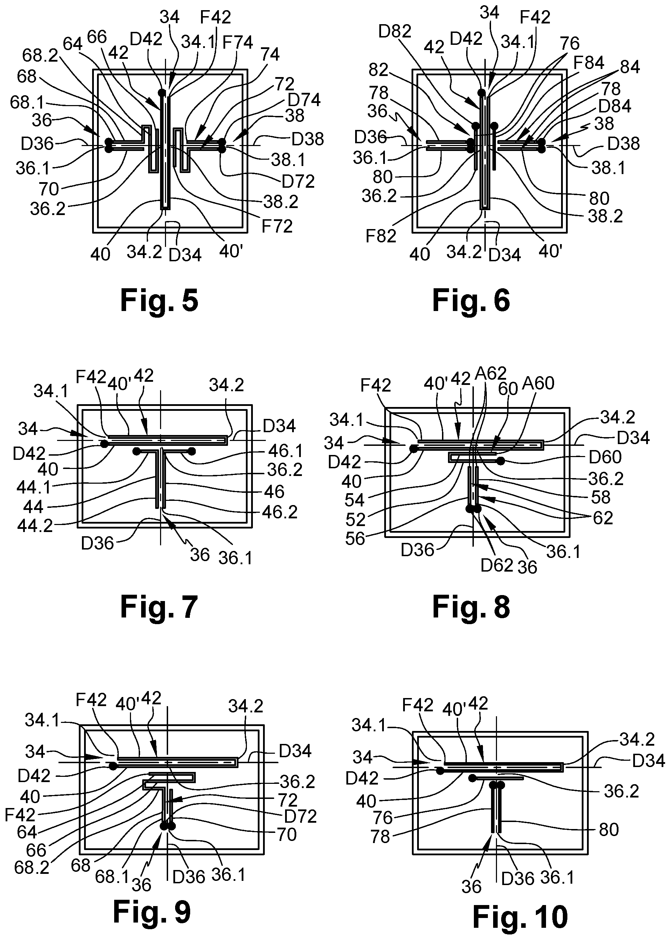

Selon un troisième mode de réalisation visible sur la figure 5, pour au moins une couche de matière 26 et de préférence chaque couche de matière 26, la deuxième ou troisième tronçon 36, 38 est obtenu en déposant :
- deux premiers cordons de matière 64, 66 parallèles entre eux et à la première direction D34, accolés au premier tronçon 34, qui s'étendent de part et d'autre de la deuxième extrémité 36.2, 38.2 du deuxième ou troisième tronçon 36, 38,
- un deuxième cordon de matière 68 en L qui présente une première partie 68.1 parallèle à la deuxième ou troisième direction D36, D38 qui s'étend à partir de la première extrémité 36.1, 38.1 du deuxième ou troisième tronçon 36, 38 jusqu'à un des premiers cordons de matière 64 ainsi qu'une deuxième partie 68.2 parallèle et accolée à un des premiers cordons de matière 64,
- un troisième cordon de matière 70 parallèle et accolée à la première partie 68.1 du deuxième cordon de matière 68 qui s'étend à partir de la première extrémité 36.1, 38.1 du deuxième ou troisième tronçon 36, 38 jusqu'à un des premiers cordons de matière 64.

Selon une configuration, les premiers cordons de matière 64, 66 et le deuxième cordon de matière 68 en L sont reliés entre eux de manière à former un cordon continu. Ainsi, pour au moins une couche de matière 26 et de préférence chaque couche de matière 26, les premiers cordons de matière 64, 66 et le deuxième cordon de matière 68 sont obtenus à partir d'une trajectoire de pose 72 comprenant un point de départ D72 situé au niveau de la première extrémité 36.1, 38.1 du deuxième ou troisième tronçon 36, 38, un premier trajet en L suivi d'un deuxième trajet aller-retour ainsi qu'un point d'arrivée F72 situé entre la première ou deuxième extrémité 34.1, 34.2 du premier tronçon 34 et la deuxième extrémité 36.2, 38.2 du deuxième ou troisième tronçon 36, 38. Pour au moins une couche de matière 26 et de préférence chaque couche de matière 26, le troisième cordon 70 est obtenu à partir d'une trajectoire de pose 74 comprenant un point de départ D74 situé au niveau de la première extrémité 36.1, 38.1 du deuxième ou troisième tronçon 36, 38, un trajet rectiligne ainsi qu'un point d'arrivée F74 accolé à un des premiers cordons de matière 64. En variante, le point de départ D74 est accolé à un des premiers cordons de matière 64 et le point d'arrivée F74 est situé au niveau de la première extrémité 36.1, 38.1 du deuxième ou troisième tronçon 36, 38. Selon un quatrième mode de réalisation visible sur la figure 6, pour au moins une couche de matière 26 et de préférence chaque couche de matière 26, la deuxième ou troisième tronçon 36, 38 est obtenu en déposant :
- un premier cordon de matière 76 parallèle à la première direction D34, accolé au premier tronçon 34, qui s'étend de part et d'autre de la deuxième extrémité 36.2, 38.2 du deuxième ou troisième tronçon 36, 38,
- deux deuxièmes cordons de matière 78, 80 parallèles entre eux et à la deuxième ou troisième direction D36, D38 qui s'étendent à partir de la première extrémité 36.1, 38.1 du deuxième ou troisième tronçon 36, 38 jusqu'au premier cordon de matière 76.

Pour au moins une couche de matière 26 et de préférence chaque couche de matière 26, le premier cordon de matière 76 est obtenu à partir d'une trajectoire de pose 82 comprenant un point de départ D82 situé entre la première extrémité 34.1 du premier tronçon 34 et la deuxième extrémité 36.2, 38.2 du deuxième ou troisième tronçon 36, 38, un trajet rectiligne ainsi qu'un point d'arrivée F82 situé entre la deuxième extrémité 34.2 du premier tronçon 34 et la deuxième extrémité 36.2, 38.2 du deuxième ou troisième tronçon 36, 38. En complément, pour au moins une couche de matière 26 et de préférence chaque couche de matière 26, chaque deuxième cordon de matière 78, 80 est obtenu à partir d'une trajectoire de pose 84 comprenant un point de départ D84 situé au niveau de la première extrémité 36.1, 38.1 du deuxième ou troisième tronçon 36, 38, un trajet rectiligne ainsi qu'un point d'arrivée F84 accolé au premier cordon de matière 76. En variante, le point de départ D84 est accolé au

premier cordon de matière 76 et le point d'arrivée F84 est situé au niveau de la première extrémité 36.1, 38.1 du deuxième ou troisième tronçon 36, 38.

Selon des modes de réalisation visibles sur les figures 7 à 10, la deuxième intersection 22' en T comprend un premier tronçon 34 pour la première nervure 14 ainsi qu'un deuxième tronçon 36 pour la deuxième nervure 16. Le premier tronçon 34 s'étend, en suivant une première direction D34, entre des première et deuxième extrémités 34.1, 34.2 positionnées de part et d'autre du deuxième tronçon 36. Le deuxième tronçon 36 s'étend, en suivant une deuxième direction D36, entre des première et deuxième extrémités 36.1, 36.2, la deuxième extrémité 36.2 étant accolée au premier tronçon 34.

Pour les modes de réalisation visibles sur les figures 7 à 10, le premier tronçon 34 est réalisé de la même manière que pour les modes opératoires visibles sur les figures 3 à 10.

Selon le mode de réalisation visible sur la figure 7, le deuxième tronçon 36 est réalisé de la même manière que celui visible sur la figure 3.

Selon le mode de réalisation visible sur la figure 8, le deuxième tronçon 36 est réalisé de la même manière que celui visible sur la figure 4.

Selon le mode de réalisation visible sur la figure 9, le deuxième tronçon 36 est réalisé de la même manière que celui visible sur la figure 5.

Selon le mode de réalisation visible sur la figure 10, le deuxième tronçon 36 est réalisé de la même manière que celui visible sur la figure 6.

Bien entendu, l'invention n'est pas limitée aux modes de réalisation précédemment décrits. Quel que soit le mode de réalisation, une intersection 22, 22' de nervures comprend une nervure principale 14, 18 et une nervure secondaire 16, 20, la nervure principale 14, 18 comprenant au moins un premier tronçon 34 qui s'étend selon une première direction D34 entre des première et deuxième extrémités 34.1, 34.2, la nervure secondaire 16, 20 comprenant au moins un deuxième tronçon 36 qui s'étend selon une deuxième direction D36, sécante avec la première direction D34, entre des première et deuxième extrémités 36.1, 36.2. La deuxième extrémité 36.2 du deuxième tronçon 36 est proche du premier tronçon 34, les première et deuxième extrémités 34.1, 34.2 du premier tronçon 34 étant positionnées de part et d'autre de la deuxième extrémité 36.2 du deuxième tronçon 36.

Pour au moins une couche de matière 26 et de préférence toutes les couches de matière 26, le premier tronçon 34 est obtenu en déposant au moins un cordon de matière 40, 40' qui s'étend selon la première direction D34 et relie les première et deuxième extrémités 34.1, 34.2. Le premier tronçon 34 peut comprendre un unique cordon de matière 40, 40' rectiligne et parallèle à la première direction D34 ou oscillant de part et d'autre de la première direction D34. En variante, le premier tronçon 34 comprend plusieurs cordons de matière 40, 40' rectilignes et parallèles à la première direction D34 distincts ou continus.

Pour au moins une couche de matière 26 et de préférence toutes les couches de matière 26, le deuxième tronçon 36 comprend une première partie obtenue en déposant au moins un cordon de matière distant du premier tronçon 34 qui s'étend selon la deuxième direction D36 ainsi qu'une deuxième partie obtenue en déposant au moins un cordon de matière accolé au premier tronçon 34 qui s'étend selon la première direction D34.

La première partie du deuxième tronçon 36 peut comprendre un unique cordon de matière rectiligne et parallèle à la deuxième direction D36 ou oscillant de part et d'autre de la deuxième direction D36. En variante, la première partie du deuxième tronçon 36 comprend plusieurs cordons de matière rectilignes et parallèles à la deuxième direction D36 distincts ou continus.

La deuxième partie du deuxième tronçon 36 peut être obtenue en déposant :
- un unique cordon de matière 44.1, 76 parallèle à la première direction D34, comme illustré sur les figures 3, 6, 7 et 10,
- deux cordons de matière 52, 54 parallèles entre eux et à la première direction D34, comme illustré sur les figures 4 et 8, distincts ou continus,
- trois cordons de matière 64, 66, 68.2 parallèles entre eux et à la première direction D34, comme illustré sur les figures 5 et 9, distincts ou continus.

Selon des modes de réalisation visibles sur les figures 3, 5, 7 et 9, au moins un cordon de matière de la première partie est relié à au moins un cordon de matière de la deuxième partie de manière à former un cordon continu.

Ces différents modes de réalisation permettent d'obtenir une surépaisseur de matière au niveau des intersections, en maîtrisant les formes des différents cordons de matière et sans surchauffe excessive de la matière.

## Revendications

1. Procédé de fabrication additive d'au moins une intersection de nervures principale et secondaire en empilant des couches de matière (26), la nervure principale (14, 18) comprenant au moins un premier tronçon (34) qui s'étend selon une première direction (D34) entre des première et deuxième extrémités (34.1, 34.2) situées de part et d'autre de la nervure secondaire (16, 18), la nervure secondaire (16, 20) comprenant au moins un deuxième tronçon (36) qui s'étend selon une deuxième direction (D36), sécante avec la première direction (D34), entre des première et deuxième extrémités (36.1, 36.2), la deuxième extrémité (36.2) du deuxième tronçon (36) étant proche du premier tronçon (34), au moins une couche de matière (26) du premier tronçon (34) étant obtenue en déposant au moins un cordon de matière (40, 40') qui s'étend selon la première direction (D34) et relie les première et deuxième extrémités (34.1, 34.2) ; **caractérisé en ce qu'**au moins une couche de matière (26) du deuxième tronçon (36) comprend une première partie obtenue en déposant au moins un cordon de matière distant du premier tronçon (34) qui s'étend selon la deuxième direction (D36) ainsi qu'une deuxième partie obtenue en déposant au moins un cordon de matière accolé au premier tronçon (34) qui s'étend selon la première direction (D34).

2. Procédé de fabrication additive selon la revendication 1, **caractérisé en ce que** la première partie du deuxième tronçon (36) est obtenue en déposant plusieurs cordons de matière rectilignes et parallèles à la deuxième direction (D36).

3. Procédé de fabrication additive selon l'une des revendications précédentes, **caractérisé en ce qu'**au moins un cordon de matière de la première partie est relié à au moins un cordon de matière de la deuxième partie de manière à former un cordon continu.

4. Procédé de fabrication additive selon l'une des revendications précédentes, **caractérisé en ce que** la deuxième partie du deuxième tronçon (36) est obtenue en déposant un unique cordon de matière (44.1, 76) parallèle à la première direction (D34).

5. Procédé de fabrication additive selon la revendication précédente, **caractérisé en ce qu'**au moins une couche de matière (26) du deuxième tronçon (36) est obtenue en déposant :
- un premier cordon de matière (44) en L qui présente une première partie (44.1) parallèle à la première direction (D34) et accolée au premier tronçon (34) ainsi qu'une deuxième partie (44.2) parallèle à la deuxième direction (D36) s'étendant jusqu'à la première extrémité (36.1) du deuxième tronçon (36),
- un deuxième cordon de matière (46) en L qui présente une première partie (46.1) parallèle à la première direction (D34) et accolée au premier tronçon (34) ainsi qu'une deuxième partie (46.2) parallèle à la deuxième direction (D36), s'étendant jusqu'à la première extrémité (36.1) du deuxième tronçon (36), parallèle et accolée à la deuxième partie (44.2) du premier cordon de matière (44) en L.

6. Procédé de fabrication additive selon la revendication précédente, **caractérisé en ce que** les premier et deuxième cordons de matière (44, 46) en L sont reliés de manière à former un cordon continu.

7. Procédé de fabrication additive selon l'une des revendications 1 à 3, **caractérisé en ce que** la deuxième partie du deuxième tronçon (36) est obtenue en déposant deux cordons de matière (52, 54) parallèles entre eux et à la première direction (D34).

8. Procédé de fabrication additive selon la revendication précédente, **caractérisé en ce qu'**au moins une couche de matière (26) du deuxième tronçon (36) est obtenue en déposant :
- deux premiers cordons de matière (52, 54) parallèles entre eux et à la première direction (D34), accolés au premier tronçon (34), qui s'étendent de part et d'autre de la deuxième extrémité (36.2) du deuxième tronçon (36),
- deux deuxièmes cordons de matière (56, 58) parallèles entre eux et à la deuxième direction (D36) qui s'étendent à partir de la première extrémité (36.1) du deuxième tronçon (36) jusqu'à un des premiers cordons de matière (52).

9. Procédé de fabrication additive selon la revendication précédente, **caractérisé en ce que** les deux premiers cordons de matière (52, 54) sont reliés entre eux de manière à former un tronçon continu.

10. Procédé de fabrication additive selon l'une des revendications 1 à 3, **caractérisé en ce que** la deuxième partie du deuxième tronçon (36) est obtenue en déposant trois cordons de matière (64, 66, 68.2) parallèles entre eux et à la première direction (D34).

11. Procédé de fabrication additive selon la revendication précédente, **caractérisé en ce qu'**au moins une couche de matière (26) du deuxième tronçon (36) est obtenue en déposant :
- deux premiers cordons de matière (64, 66) parallèles entre eux et à la première direction (D34), accolés au premier tronçon (34), qui s'étendent de part et d'autre de la deuxième extrémité (36.2) du deuxième tronçon (36),
- un deuxième cordon de matière (68) en L présentant une première partie (68.1) parallèle à la deuxième direction (D36) qui s'étend à partir de la première extrémité (36.1) du deuxième tronçon (36) jusqu'à un des premiers cordons de matière (64) ainsi qu'une deuxième partie (68.2) parallèle et accolée à un des premiers cordons de matière (64),
- un troisième cordon de matière (70) parallèle et accolée à la première partie (68.1) du deuxième cordon de matière (68) qui s'étend à partir de la première extrémité (36.1) du deuxième tronçon (36) jusqu'à un des premiers cordons de matière (64).

12. Procédé de fabrication additive selon la revendication précédente, **caractérisé en ce que** les premiers cordons de matière (64, 66) et le deuxième cordon de matière (68) en L sont reliés entre eux de manière à former un cordon continu.

13. Procédé de fabrication d'un panneau nervuré comprenant une première phase d'ébauche qui permet d'obtenir des ébauches de nervures comportant au moins une intersection obtenue à partir du procédé de fabrication additive selon l'une des revendications précédentes ainsi qu'une deuxième phase d'usinage des nervures aux côtes finales.

14. Panneau nervuré obtenu à partir du procédé de fabrication selon la revendication précédente.

## Patentansprüche

1. Verfahren zur additiven Herstellung von wenigstens einem Schnittpunkt von Haupt- und Nebenrippen durch Stapeln von Materialschichten (26), wobei die Hauptrippe (14, 18) wenigstens einen ersten Abschnitt (34) aufweist, der sich in eine erste Richtung (D34) zwischen einem ersten und einem zweiten Ende (34.1, 34.2) erstreckt, die sich beidseits der Nebenrippe (16, 18) befinden, wobei die Nebenrippe (16, 20) wenigstens einen zweiten Abschnitt (36) aufweist, der sich in eine zweite Richtung (D36), die die erste Richtung (D34) schneidet, zwischen einem ersten und einem zweiten Ende (36.1, 36.2) erstreckt, wobei das zweite Ende (36.2) des zweiten Abschnitts (36) in der Nähe des ersten Abschnitts (34) liegt und wobei wenigstens eine Materialschicht (26) des ersten Abschnitts (34) durch Aufbringen wenigstens eines Materialstrangs (40, 40') erhalten wird, der sich in die erste Richtung (D34) erstreckt und das erste und zweite Ende (34.1, 34.2) verbindet, **dadurch gekennzeichnet, dass** wenigstens eine Materialschicht (26) des zweiten Abschnitts (36) einen ersten Teil aufweist, der durch Aufbringen wenigstens eines Materialstrangs erhalten wird, der von dem ersten Abschnitt (34) entfernt ist und sich in die zweite Richtung (D36) erstreckt, sowie einen zweiten Teil, der durch Aufbringen wenigstens eines Materialstrangs erhalten wird, der an den ersten Abschnitt (34) angefügt ist und sich in die erste Richtung (D34) erstreckt.

2. Verfahren zur additiven Herstellung nach Anspruch 1, **dadurch gekennzeichnet, dass** der erste Teil des zweiten Abschnitts (36) durch Aufbringen mehrerer geradliniger und parallel zur zweiten Richtung (D36) verlaufender Materialstränge erhalten wird.

3. Verfahren zur additiven Herstellung nach einem der vorhergehenden Ansprüche, **dadurch gekennzeichnet, dass** wenigstens ein Materialstrang des ersten Teils mit wenigstens einem Materialstrang des zweiten Teils verbunden wird, um einen durchgehenden Strang zu bilden.

4. Verfahren zur additiven Herstellung nach einem der vorhergehenden Ansprüche, **dadurch gekennzeichnet, dass** der zweite Teil des zweiten Abschnitts (36) durch Aufbringen eines einzelnen Materialstrangs (44.1, 76) parallel zur ersten Richtung (D34) erhalten wird.

5. Verfahren zur additiven Herstellung nach dem vorhergehenden Anspruch, **dadurch gekennzeichnet, dass** wenigstens eine Materialschicht (26) des zweiten Abschnitts (36) erhalten wird durch Aufbringen:
- eines ersten L-förmigen Materialstrangs (44), der einen ersten Teil (44.1) aufweist, der parallel zur ersten Richtung (D34) verläuft und an den ersten Abschnitt (34) angefügt ist, sowie einen zweiten Teil (44.2), der parallel zur zweiten Richtung (D36) verläuft und sich bis zum ersten Ende (36.1) des zweiten Abschnitts (36) erstreckt,
- eines zweiten L-förmigen Materialstrangs (46), der einen ersten Teil (46.1) aufweist, der parallel zur ersten Richtung (D34) verläuft und an den ersten Abschnitt (34) angefügt ist, sowie einen zweiten Teil (46.2), der parallel zur zweiten Richtung (D36) verläuft und sich bis zum ersten Ende (36.1) des zweiten Abschnitts (36) erstreckt und parallel zum zweiten Teil (44.2) des ersten L-förmigen Materialstrangs (44) verläuft und an diesen angefügt ist.

6. Verfahren zur additiven Herstellung nach dem vorhergehenden Anspruch, **dadurch gekennzeichnet, dass** die ersten und zweiten L-förmigen Materialstränge (44, 46) so verbunden werden, dass diese einen kontinuierlichen Strang bilden.

7. Verfahren zur additiven Herstellung nach einem der Ansprüche 1 bis 3, **dadurch gekennzeichnet, dass** der zweite Teil des zweiten Abschnitts (36) durch ein Aufbringen von zwei zueinander und zur ersten Richtung (D34) parallelen Materialsträngen (52, 54) erhalten wird.

8. Verfahren zur additiven Herstellung nach dem vorhergehenden Anspruch, **dadurch gekennzeichnet, dass** wenigstens eine Materialschicht (26) des zweiten Abschnitts (36) erhalten wird durch Aufbringen von:
- zwei ersten Materialsträngen (52, 54), die zueinander und zur ersten Richtung (D34) parallel verlaufen, an den ersten Abschnitt (34) angefügt sind und sich auf beidseits des zweiten Endes (36.2) des zweiten Abschnitts (36) erstrecken,
- zwei zweiten Materialsträngen (56, 58), die zueinander und zur zweiten Richtung (D36) parallel verlaufen und sich vom ersten Ende (36.1) des zweiten Abschnitts (36) bis zu einem der ersten Materialstränge (52) erstrecken.

9. Verfahren zur additiven Herstellung nach dem vorhergehenden Anspruch, **dadurch gekennzeichnet, dass** die beiden ersten Materialstränge (52, 54) so miteinander verbunden sind, dass sie einen durchgehenden Abschnitt bilden.

10. Verfahren zur additiven Herstellung nach einem der Ansprüche 1 bis 3, **dadurch gekennzeichnet, dass** der zweite Teil des zweiten Abschnitts (36) durch Aufbringen von drei zueinander und zur ersten Richtung (D34) parallelen Materialsträngen (64, 66, 68.2) erhalten wird.

11. Verfahren zur additiven Herstellung nach dem vorhergehenden Anspruch, **dadurch gekennzeichnet, dass** wenigstens eine Materialschicht (26) des zweiten Abschnitts (36) erhalten wird durch Aufbringen von:
- zwei ersten Materialsträngen (64, 66), die zueinander und zur ersten Richtung (D34) parallel verlaufen, an den ersten Abschnitt (34) angefügt sind und sich beidseits des zweiten Endes (36.2) des zweiten Abschnitts (36) erstrecken,
- einen zweiten L-förmigen Materialstrang (68) mit einem ersten Teil (68.1), der parallel zur zweiten Richtung (D36) verläuft und der sich vom ersten Ende (36.1) des zweiten Abschnitts (36) bis zu einem der ersten Materialstränge (64) erstreckt, sowie mit einem zweiten Teil (68.2), der parallel zu einem der ersten Materialstränge (64) verläuft und an diesen angefügt ist,
- einen dritten Materialstrang (70), der parallel zu dem ersten Teil (68.1) des zweiten Materialstrangs (68) verläuft und an diesen angefügt ist und sich von dem ersten Ende (36.1) des zweiten Abschnitts (36) bis zu einem der ersten Materialstränge (64) erstreckt.

12. Verfahren zur additiven Herstellung nach dem vorhergehenden Anspruch, **dadurch gekennzeichnet, dass** die ersten Materialstränge (64, 66) und der zweite L-förmige Materialstrang (68) miteinander verbunden werden, um einen kontinuierlichen Strang zu bilden.

13. Verfahren zur Herstellung einer gerippten Platte mit einer ersten Rohlingsphase, die es gestattet, Rohlinge von Rippen mit wenigstens einem Schnittpunkt zu erhalten, der mit dem Verfahren zur additiven Herstellung nach einem der vorhergehenden Ansprüche erhalten wird, sowie mit einer zweiten Phase der Bearbeitung der Rippen auf die endgültigen Rippenmaße.

14. Gerippte Platte, die mit dem Verfahren zur Herstellung nach dem vorhergehenden Anspruch erhalten worden ist.

## Claims

1. Additive method of manufacturing at least one intersection of main and secondary ribs by stacking layers of material (26), the main rib (14, 18) comprising at least one first section (34) that extends in a first direction (D34) between first and second ends (34.1, 34.2) situated on respective opposite sides of the secondary rib (16, 18), the secondary rib (16, 20) comprising at least one second section (36) that extends in a second direction (D36) intersecting the first direction (D34) between first and second ends (36.1, 36.2), the second end (36.2) of the second section (36) being close to the first section (34), at least one layer of material (26) of the first section (34) being obtained by depositing at least one bead of material (40, 40') that extends in the first direction (D34) and connects the first and second ends (34.1, 34.2), **characterized in that** at least one layer of material (26) of the second section (36) comprises a first part obtained by depositing at least one bead of material at a distance from the first section (34) that extends in the second direction (D36) and a second part obtained by depositing at least one bead of material adjacent to the first section (34) that extends in the first direction (D34).

2. Additive manufacturing method as claimed in claim 1, **characterized in that** the first part of the second section (36) is obtained by depositing a plurality of rectilinear beads of material parallel to the second direction (D36).

3. Additive manufacturing method as claimed in either one of the preceding claims, **characterized in that** at least one bead of material of the first part is connected to at least one bead of material of the second part in such a manner as to form a continuous bead.

4. Additive manufacturing method as claimed in any one of the preceding claims, **characterized in that** the second part of the second section (36) is obtained by depositing a single bead of material (44.1, 76) parallel to the first direction (D34).

5. Additive manufacturing method as claimed in the preceding claim, **characterized in that** at least one layer of material (26) of the second section (36) is obtained by depositing:
- a first L-shape bead of material (44) that has a first part (44.1) parallel to the first direction (D34) and adjacent to the first section (34) and a second part (44.2) parallel to the second direction (D36) extending as far as the first end (36.1) of the second section (36),
- a second L-shape bead of material (46) that has a first part (46.1) parallel to the first direction (D34) and adjacent to the first section (34) and a second part (46.2) parallel to the second direction (D36) extending as far as the first end (36.1) of the second section (36), parallel to and adjacent to the second part (44.2) of the first L-shape bead of material (44).

6. Additive manufacturing method as claimed in the preceding claim, **characterized in that** the first and second L-shape beads of material (44, 46) are connected in such as a manner as to form a continuous bead.

7. Additive manufacturing method as claimed in any one of claims 1 to 3, **characterized in that** the second part of the second section (36) is obtained by depositing two beads of material (52, 54) parallel to each other and the first direction (D34).

8. Additive manufacturing method as claimed in the preceding claim, **characterized in that** at least one layer of material (26) of the second section (36) is obtained by depositing:
- two first beads of material (52, 54) parallel to each other and to the first direction (D34) and adjacent to the first section (34) that extend on respective opposite sides of the second end (36.2) of the second section (36),
- two second beads of material (56, 58) parallel to each other and to the second direction (D36) that extend from the first end (36.1) of the second section (36) as far as one of the first beads of material (52).

9. Additive manufacturing method as claimed in the preceding claim, **characterized in that** the first two beads of material (52, 54) are connected to each other in such a manner as to form a continuous section.

10. Additive manufacturing method as claimed in any one of claims 1 to 3, **characterized in that** the second part of the second section (36) is obtained by depositing three beads of material (64, 66, 68.2) parallel to one another and to the first direction (D34).

11. Additive manufacturing method as claimed in the preceding claim, **characterized in that** at least one layer of material (26) of the second section (36) is obtained by depositing:
- two first beads of material (64, 66) parallel to each other and to the first direction (D34), adjacent to the first section (34), that extend on respective opposite sides of the second end (36.2) of the second section (36),
- a second L-shape bead of material (68) having a first part (68.1) parallel to the second direction (D36) that extends from the first end (36.1) of the second section (36) as far as one of the first beads of material (64) and a second part (68.2) parallel to and adjacent to one of the first beads of material (64),
- a third bead of material (70) parallel to and adjacent to the first part (68.1) of the second bead of material (68) that extends from the first end (36.1) of the second section (36) as far as one of the first beads of material (64).

12. Additive manufacturing method as claimed in the preceding claim, **characterized in that** the first beads of material (64, 66) and the L-shape second bead of material (68) are connected to one another in such a manner as to form a continuous bead.

13. Method of manufacturing a ribbed panel comprising a first blanking phase that enables rib blanks to be obtained including at least one intersection and obtained using the additive manufacturing method as claimed in any one of the preceding claims and a second phase of machining the ribs to the finished dimensions.

14. Ribbed panel obtained using the manufacturing method claimed in the preceding claim.
